# EUROPÄISCHE PATENTANMELDUNG

(11) **EP 2 148 130 A2**
(43) Veröffentlichungstag der Anmeldung: **27.01.2010**
(21) Anmeldenummer: 09162831.3
(22) Anmeldetag: 16.06.2009
(51) Int. Cl.: F21S 8/00, F21V 14/04, A63J 5/02, B44F 1/00, G03B 21/00, G09F 13/14

(54) **Optisches Element**

(30) Priorität: 17.07.2008 DE 102008033543
(71) Anmelder: Osram Gesellschaft mit beschränkter Haftung, 81543 München (DE)
(72) Erfinder: Dellian, Harald, 83533, Edling (DE)

(57) **Zusammenfassung**

Optisches Element mit mindestens einem elastisch verformbaren Träger, auf dem mindestens eine reflektierende Schicht aufgebracht ist, und ferner mit mindestens einer Verformungsvorrichtung zum elastischen Verformen des mindestens einen Trägers.

## Beschreibung

Die Erfindung betrifft ein optisches Element und eine Leuchtvorrichtung mit mindestens einem solchen optischen Element.

Bei schmalwinklig abstrahlenden Lichtquellen wie Leuchtdioden ist häufig eine Verteilung des von diesen abgestrahlten Lichts nötig. Dazu sind bisher starre Optiken aus Kunststoffen in Form von Halbkugeln oder in Kegelform bekannt.

Es ist die Aufgabe der vorliegenden Erfindung, eine Möglichkeit zur, insbesondere über einen großen Bereich und zudem schnell, veränderlichen Lichtverteilung bereitzustellen.

Diese Aufgabe wird mittels eines optischen Elements und einer Leuchtvorrichtung nach dem jeweiligen Hauptanspruch gelöst. Bevorzugte Ausführungsformen sind insbesondere den abhängigen Ansprüchen entnehmbar.

Das optische Element weist mindestens einen elastisch verformbaren Träger auf, auf dem mindestens eine reflektierende Schicht aufgebracht ist. Das optische Element weist ferner mindestens eine Verformungsvorrichtung zum elastischen Verformen des mindestens einen Trägers auf. Durch eine Betätigung der Verformungsvorrichtung ist somit der Verformungsgrad des Trägers und damit der darauf aufgebrachten reflektierenden Schicht(en) einstellbar. Dadurch wiederum lässt sich die Abstrahlcharakteristik stark und schnell ändern.

Es wird ein optisches Element bevorzugt, bei dem der Träger ein flächiges Tragwerk aufweist, auf dem die mindestens eine reflektierende Schicht aufgebracht ist. Das flächige Tragwerk kann ebene (plattenförmige) Bereiche und / oder gekrümmte (schalenförmige) Bereiche aufweisen.

Das Tragwerk kann selbsttragend sein. Jedoch ist es für eine besonders schnelle Verformung unter Anlegen vergleichsweise geringer Kräfte, vorteilhaft, wenn das Tragwerk sehr leicht verformbar oder sogar nicht selbsttragend ist. Beispiele für ein nicht selbsttragendes Tragwerk sind ein Gewebe, eine dünne Folie und eine Gummilage. Dann ist es zur Sicherstellung einer Formstabilität vorteilhaft, wenn das flächige Tragwerk mit elastischen Streben versehen ist.

Es ist für einen einfachen Aufbau vorteilhaft, wenn die elastischen Streben als gebogene Drähte ausgebildet sind, insbesondere, falls sie unter einer Biegespannung stehen. Diese können in das Tragwerk beispielsweise einklebt, eingegossen (bei Kunststoff), eingewebt, einvulkanisiert usw. werden.

Für eine besonders leichte und damit schnelle Verformbarkeit wird alternativ ein optisches Element bevorzugt, bei dem der Träger eine Trägerschicht aufweist, die mit der mindestens einen reflektierenden Schicht versehen ist und die aus einem (natürlichen oder synthetischen) Kautschukmaterial, z. B. Gummi, besteht.

Die Verformungsvorrichtung weist vorzugsweise mindestens ein am Träger, insbesondere Tragwerk des Trägers, angreifendes Zugelement und mindestens eine am Träger befestigte, insbesondere aufliegende, Spannvorrichtung zum wahlweisen Spannen und Entspannen und damit gezielten (stärkeren und weniger starken) Verformen des Tragwerks auf.

Zur großflächigen Verformung des Trägers wird es bevorzugt, wenn das Zugelement an einem dem Befestigungsbereich mit der Spannvorrichtung entgegengesetzten Rand des Trägers angreift. Eine Spannung und Entspannung bzw. Verkürzung und Verlängerung kann so über eine große Breite des optischen Elements aufgebracht werden.

Vorzugsweise umfasst das Zugelement mindestens einen Zugdraht, insbesondere bei Anordnung in einem Sichtbereich oder in einem optischen Strahlengang bevorzugt aus einem transparenten Material, speziell Kunststoff, besonders bevorzugt Nylon. Es kann aber auch ein nicht lichtdurchlässiger Zugdraht verwendet werden, z. B. aus Metall.

Zur einfachen Spannung und Entspannung des Zugelements wird es bevorzugt, wenn das mindestens eine Zugelement an einem Gewinde der Spannvorrichtung befestigt ist und mit dieser längsbewegbar ist.

Alternativ kann die Spannvorrichtung eine Klemmvorrichtung zum wahlweisen Halten und Lösen des mindestens einen Zugelements aufweist, z. B. in Form eines Schnellspanners.

Das Zugelement kann aber auch mittels eines anderen Antriebs bewegt werden, z. B. mittels eines elektromotorischen Stellmotors, eines piezoaktorischen Linearantriebs, einer angetriebenen Rolle usw.

Das optische Element kann auch mit zwei oder mehr elastisch verformbaren Trägern und mit einer Verformungsvorrichtung zum gemeinsamen Verformen der Träger ausgerüstet sein.

Es ist zur Übersetzung der Verformung in eine große Änderung der Abstrahlcharakteristik vorteilhaft, wenn die reflektierende(n) Schicht(en) sphärisch oder kegelförmig geformt ist / sind.

Die Leuchtvorrichtung ist mit mindestens einem optischen Element und mindestens einer auf das mindestens eine optische Element gerichteten Lichtquelle, insbesondere mit zwei gegenüberliegenden Lichtquellen ausgestattet.

Bevorzugterweise umfasst die Lichtquelle mindestens eine Leuchtdiode. Die Lichtquelle kann beispielsweise als LED-Modul mit einem Leuchtdioden-Chip oder mehreren Leuchtdioden-Chips vorliegen. Die einzelnen Leuchtdioden oder Leuchtdioden-Chips können jeweils einfarbig oder mehrfarbig, z. B. weiß, abstrahlen. So mag ein LED-Modul mehrere Einzel-LED-Chips ('LED-Cluster') aufweisen, welche zusammen ein weißes Mischlicht ergeben können, z. B. in 'kaltweiß' oder 'warmweiß'. Zur Erzeugung eines weißen Mischlichts umfasst das LED-Cluster bevorzugt Leuchtdioden, die in den Grundfarben rot (R), grün (G) und blau (B) leuchten. Dabei können einzelne oder mehrere Farben auch von mehreren LEDs gleichzeitig erzeugt werden; so sind Kombinationen RGB, RRGB, RGGB, RGBB, RGGBB usw. möglich. Jedoch ist die Farbkombination nicht auf R, G und B beschränkt. Zur Erzeugung eines warmweißen Farbtons können beispielsweise auch eine oder mehrere bernsteinfarbige LEDs 'amber' (A) vorhanden sein. Bei LEDs mit unterschiedlichen Farben können diese auch so angesteuert werden, dass das LED-Modul in einem durchstimmbaren RGB-Farbbereich abstrahlt. Zur Erzeugung eines weißen Lichts aus einer Mischung von blauem Licht mit gelbem Licht können auch mit Leuchtstoff versehene blaue LED-Chips verwendet werden, z. B. in Oberflächenmontagetechnik, z. B. in Thin-GaN-Technik. Dann kann ein LED-Modul auch mehrere weiße Einzel-Chips aufweisen, wodurch sich eine einfache Skalierbarkeit des Lichtstroms erreichen lässt. Die Einzel-Chips und / oder die Module können mit geeigneten Optiken zur Strahlführung ausgerüstet sein, z. B. Fresnel-Linsen, Kollimatoren, und so weiter. Es können an einem Kontakt mehrere gleiche oder verschiedenartige LED-Module angeordnet sein, z. B. mehrere gleichartige LED-Module auf dem gleichen Substrat. Statt oder zusätzlich zu anorganischen Leuchtdioden, z. B. auf Basis von InGaN oder AlInGaP, sind allgemein auch organische LEDs (OLEDs) einsetzbar. Auch können z. B. Diodenlaser verwendet werden.

In den folgenden Figuren wird die Erfindung anhand eines Ausführungsbeispiels schematisch genauer beschrieben. Dabei können zur besseren Übersichtlichkeit gleiche oder gleichwirkende Elemente mit gleichen Bezugszeichen versehen sein.
- FIG 1: skizziert als Schnittdarstellung in Seitenansicht ein optisches Element;
- FIG 2: zeigt in Aufsicht von vorne eine Anordnung von Biegedrähten des optischen Elements aus FIG 1;
- FIG 3A: skizziert eine Leuchtvorrichtung mit einem nicht oder nur wenig verformten optischen Element;
- FIG 3B: skizziert eine Leuchtvorrichtung mit einem im Vergleich zu FIG 3A stärker verformten optischen Element.

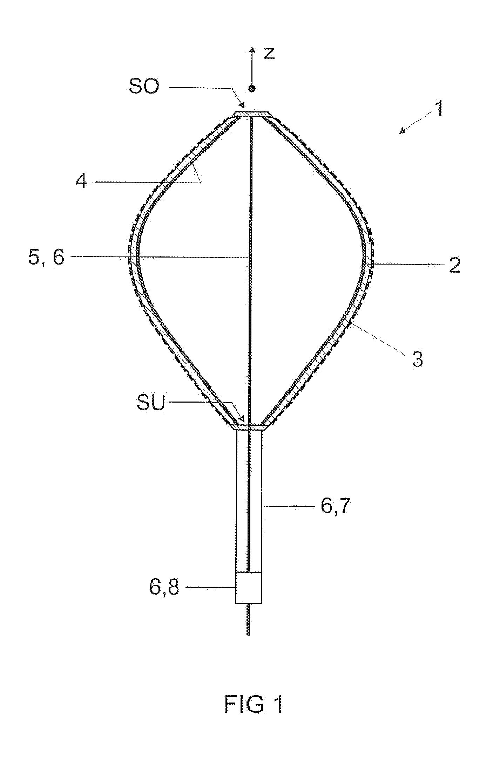

FIG 1 zeigt ein optisches Element 1 mit einem elastisch verformbaren (flexiblen), schalenförmigen, um die Längsachse (z-Achse) winkelsymmetrisch aufgebauten Tragwerk 2 aus Kunststoff, auf dessen Außenseite eine reflektierende Schicht 3 aufgebracht ist. Das Tragwerk 2 ist ferner mit elastischen Streben in Form von stützenden Biegedrähten 4 versehen, wobei diese Biegedrähte 4 im Kunststoffmaterial des Tragwerks 2 vergossen sind. Am oberen Scheitelpunkt SO des Tragwerks 2 ist ein Zugdraht 5 nicht-lösbar mit dem Tragwerk 2 dadurch verbunden, dass es mit seinem Ende in dem Kunststoff vergossen ist. An dem dem oberen Scheitelpunkt SO entgegengesetzten unteren Scheitelpunkt SU des Tragwerks 2 sitzt eine Verformungsvorrichtung zum elastischen Verformen des Tragwerks 2 in Form einer Spannvorrichtung 6 zum wahlweisen Spannen und Entspannen des Zugdrahts 5. Dazu reicht der Zugdraht 5 durch eine Hülse 7 in der Spannvorrichtung 6 zu einem Gewinde 8, an dem der Zugdraht 5 fest angebracht ist. Durch Drehen des Gewindes 8, z. B. mittels eines hier nicht dargestellten Elektromotors oder sogar händisch, wird der Zugdraht 5 gegenüber der Hülse 7 wahlweise in beide Richtungen verschoben und somit aus- und eingefahren. Da die Hülse 7 fest auf dem Tragwerk 2 aufliegt, wird der Abschnitt des Zugdrahts 5 zwischen dem oberen Scheitelpunkt SO und dem unteren Scheitelpunkt SU entsprechend verkürzt (gespannt) oder verlängert (entspannt). Folgend wird das Tragwerk 2 stärker oder schwächer gekrümmt. Dadurch lässt sich erstens eine geometrische Abstrahlcharakteristik der auf dem Tragwerk 2 aufliegenden reflektierenden Schicht 3 und zweitens ein von Einfallswinkel abhängiger Brechungsindex der reflektierenden Schicht(en) 3 einstellen. Dadurch ergeben sich die Vorteile, dass eine Brechkraft über einen weiten Bereich einstellen lässt und die Geschwindigkeit der Verformung sehr schnell erfolgen kann. Die reflektierenden Schichten weisen nämlich Verluste auf, da nicht das ganze Licht reflektiert wird, sondern unter anderem ein kleiner Anteil in Abhängigkeit des Brechungsindex' in die Schicht eingekoppelt wird.

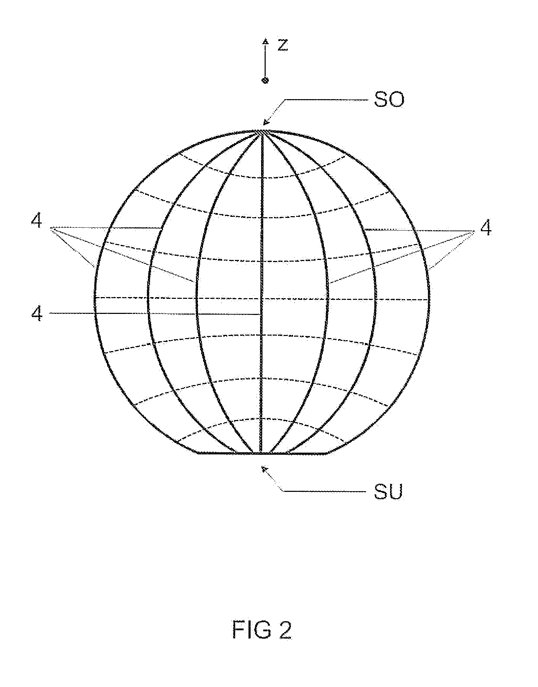

Wie genauer in FIG 2 gezeigt, weist das Tragwerk 2 mehrere sich in einer senkrecht stehenden Ebene erstreckende Biegedrähte 4 auf, die in Umfangsrichtung um den Zugdraht gleichmäßig, d. h., mit gleichem Winkelabstand um die Achse des Zugdrahts (z-Achse), verteilt sind. Zusätzlich oder alternativ können beispielsweise aber auch ungefähr waagerecht liegende Biegedrähte 8 im Tragwerk 2 angebracht sein, wie hier gestrichelt eingezeichnet, oder auch um eine Normale zur Senkrechten winkelbeabstandete Biegedrähte. Durch die Biegedrähte wird das zur schnellen Schaltung sehr flexible Tragwerk stabilisiert und ggf. in der Fläche gespannt.

In einer weiteren Ausführungsform ist das Tragwerk aus einem Kautschukmaterial hergestellt, z. B. aus Gummi (vulkanisiertem Kautschuk).

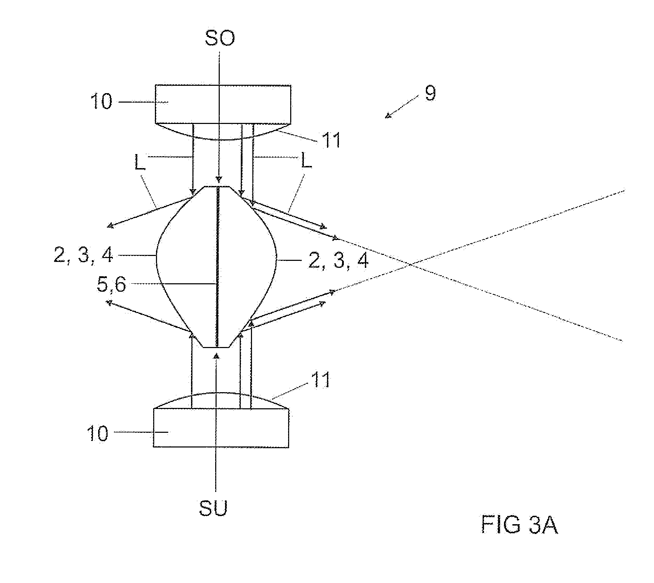

FIG 3A skizziert eine Leuchtvorrichtung 9 mit einem nicht oder nur wenig verformten optischen Element 1 aus FIG 1. Den Scheitelpunkten SO und SU des optischen Elements 1 liegt jeweils eine Leuchtdiode 10 gegenüber, welche senkrecht (entlang der z-Richtung) auf das optische Element 1 gerichtet ist. Jede der LEDs 10 ist mit einer Optik 11, z. B. einer Linse, ausgerüstet, um das von der LED 10 ausgestrahlte Licht L auf das optische Element 1 bzw. dessen reflektierende Schicht (en) 4 zu richten, von wo aus es unter einem von der Einfallsposition der reflektierenden Schicht 4 abhängigen Abstrahlwinkel seitlich abgestrahlt wird, wie schematisch gestrichelt dargestellt. Bei der gezeigten Leuchtvorrichtung 9 mit den zwei Lichtquellen wird ein transparenter Zugdraht 5 bevorzugt, da dieser dann die Lichteinstrahlung der ihm direkt gegenüberliegenden Lichtquelle nicht behindert.

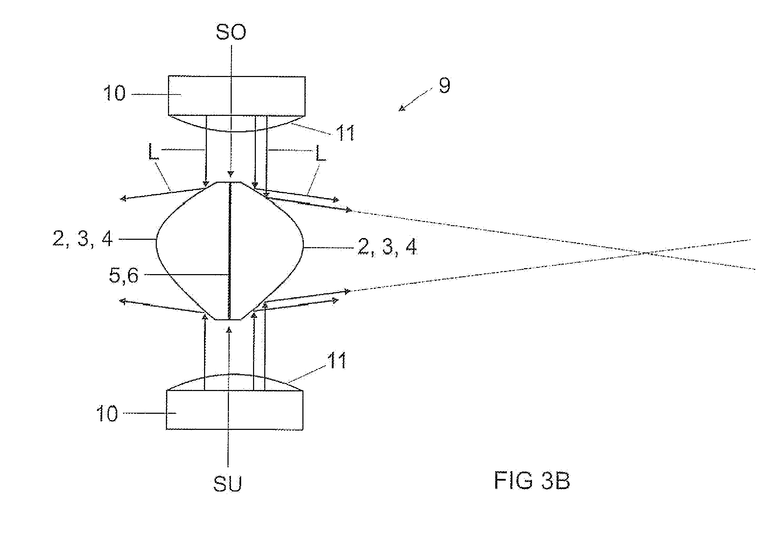

FIG 3B skizziert eine Leuchtvorrichtung 9 mit einem im Vergleich zu FIG 3A stärker verformten optischen Element 1. Durch Spannen bzw. Straffen des Zugdrahts 5 wird das Tragwerk 2 mit der reflektierenden Schicht 3 in Längsrichtung (z-Richtung) verkürzt (gestaucht), wodurch sich die Wölbung verstärkt. Dadurch treffen die Lichtstrahlen L von den LEDs 10 unter einem anderen Winkel auf der reflektierenden Oberfläche 3 auf als bei FIG 3A, wodurch sich erstens der seitlich Abstrahlwinkel ändert, als auch der Brechungsindex der reflektierenden Schichten nach dem Snellius'schen Brechungsgesetz. Dadurch ändert sich die Abstrahlcharakteristik des optischen Elements 1.

Selbstverständlich ist die vorliegende Erfindung nicht auf die gezeigten Ausführungsbeispiele beschränkt.

So kann der Zugdraht beispielsweise auch mittels eines elektromechanischen Stellantriebs oder mittels eines Piezoaktors bewegt werden.

Bei einer ausreichenden Festigkeit des Tragwerks kann auch auf die Biegedrähte verzichtet werden.

Der Zugdraht kann auch aus Metall bestehen, z. B. in Form eines Metallseils, dessen einzelne Drähte symmetrisch am oberen Ende um den oberen Scheitelpunkt heran angreifen.

Statt eines Drahts kann z. B. auch ein Stab verwendet werden, z. B. aus Plexiglas.

Statt eines Zugelements kann auch ein Zug-/Druck-Element verwendet werden, z. B. ein Stab, der das Tragwerk bzw. den Träger unter Kraftaufwand sowohl stauchen als auch strecken kann.

Eine weitere Verformungsvorrichtung könnte beispielsweise Druckluft zu einem luftdicht verschlossenen Träger zuführen oder davon ablassen.

### Bezugszeichenliste

- 1: optisches Element
- 2: Tragwerk
- 3: reflektierende Schicht(en)
- 4: Biegedraht
- 5: Zugdraht
- 6: Spannvorrichtung
- 7: Hülse
- 8: Gewinde
- 9: Leuchtvorrichtung
- 10: Leuchtdiode
- 11: Linse
- L: Lichtstrahl
- SO: oberer Scheitelpunkt
- SU: unterer Scheitelpunkt

## Patentansprüche

1. Optisches Element (1) mit mindestens einem elastisch verformbaren Träger (2), auf dem mindestens eine reflektierende Schicht (3) aufgebracht ist, und ferner mit mindestens einer Verformungsvorrichtung (6) zum elastischen Verformen des mindestens einen Trägers (2).

2. Optisches Element (1) nach Anspruch 1, bei dem der Träger ein flächiges Tragwerk (2) aufweist, auf dem die mindestens eine reflektierende Schicht (3) aufgebracht ist und wobei das flächige Tragwerk (2) mit elastischen Streben (4) versehen ist.

3. Optisches Element (1) nach Anspruch 2, bei dem die elastischen Streben als gebogene Drähte (4) ausgebildet sind.

4. Optisches Element (1) nach Anspruch 3, bei dem die gebogenen Drähte (4) unter einer Biegespannung stehen.

5. Optisches Element (1) nach einem der vorhergehenden Ansprüche, bei dem der Träger eine Trägerschicht (2) aufweist, die mit der mindestens einen reflektierenden Schicht (3) versehen ist und die aus einem Kautschukmaterial besteht.

6. Optisches Element (1) nach einem der vorhergehenden Ansprüche, bei dem die Verformungsvorrichtung aufweist:
- mindestens ein am Träger (2) angreifendes Zugelement (5) und
- eine am Träger (2) befestigte Spannvorrichtung (6) zum wahlweisen Spannen und Entspannen des Zugelements.

7. Optisches Element (1) nach Anspruch 6, bei dem das Zugelement (5) an einem dem Befestigungsbereich (SU) der Spannvorrichtung (6) entgegengesetzten Rand (SO) des Trägers (2) angreift.

8. Optisches Element (1) nach Anspruch 6 oder 7, bei dem das Zugelement mindestens einen Zugdraht (5) oder Zugstab umfasst.

9. Optisches Element (1) nach einem der Ansprüche 6 bis 8, bei dem des mindestens eine Zugelement (5) an einem Gewinde (8) der Spannvorrichtung (6) befestigt ist.

10. Optisches Element (1) nach einem der Ansprüche 6 bis 9, bei dem das Zugelement (5) aus einem transparenten Kunststoff, insbesondere Nylon, besteht.

11. Optisches Element (1) nach einem der Ansprüche 6 bis 10, bei dem die Spannvorrichtung eine Klemmvorrichtung zum wahlweisen Halten und Lösen des mindestens einen Zugelements (5) aufweist.

12. Optisches Element (1) nach einem der vorhergehenden Ansprüche, aufweisend mit mindestens zwei elastisch verformbaren Trägern (2) und mit einer Verformungsvorrichtung (6) zum gemeinsamen Verformen der Träger (2).

13. Optisches Element (1) nach einem der vorhergehenden Ansprüche, bei dem die reflektierende Schicht (3) des mindestens einen Trägers (2) sphärisch oder kegelförmig geformt ist.

14. Leuchtvorrichtung mit mindestens einem optischen Element (1) und mindestens einer auf das mindestens eine optische Element (1) ausgerichteten Leuchtdiode (10), insbesondere zwei gegenüberliegenden Leuchtdioden (10).
